# DEMANDE DE BREVET EUROPEEN

(11) **EP 4 764 451 A1**
(43) Date de publication de la demande: **24.06.2026**
(21) Numéro de dépôt: 25223249.1
(22) Date de dépôt: 15.12.2025
(51) Int. Cl.: G01N 3/04, G01N 3/20, G01N 3/32

(54) **DISPOSITIF ET PROCÉDÉ D'ESSAI EN FLEXION D'UNE ÉPROUVETTE**

(30) Priorité: 20.12.2024 FR 2414974
(71) Demandeur: Commissariat à l'Energie Atomique et aux Energies Alternatives, 75015 Paris (FR)
(72) Inventeur: JACQUEMOUD, Clémentine, 75015 PARIS (FR); GOURDIN, Cédric, 75015 PARIS (FR); LECOUR, Julien, 75015 PARIS (FR)
(74) Mandataire: Regimbeau

(57) **Abrégé**

La présente invention concerne un dispositif d'essai (1) en flexion d'une éprouvette (3) et un procédé correspondant, le dispositif d'essai (1) comportant un premier support (5) et un deuxième support (7), un premier levier (9) et le premier support (5) matérialisant un premier axe d'articulation (A1), un deuxième levier (11) et le premier support (5) matérialisant un deuxième axe d'articulation (A2), le premier levier (9) et le deuxième support (7) matérialisant un troisième axe d'articulation (A3), et le deuxième levier (11) et le deuxième support (7) matérialisant un quatrième axe d'articulation (A4), les axes d'articulation (A1-A4) étant parallèles et orthogonaux à l'axe d'actionnement (Z), un premier mors (13) fixé au premier levier (9) et un deuxième mors (17) fixé au deuxième levier (11) fixant l'éprouvette (3) entre eux, un déplacement relatif du premier support (5) et du deuxième support (7) selon l'axe d'actionnement (Z) provoquant une flexion de l'éprouvette (3).

## Description

### DOMAINE TECHNIQUE

La présente invention se rapporte au domaine des essais de flexion.

L'invention s'applique plus particulièrement à un dispositif d'essai en flexion d'une éprouvette, ainsi qu'à un procédé d'essai en flexion d'une éprouvette.

L'invention est notamment applicable à la réalisation d'essais d'intégrité de structures mécaniques utilisant des éprouvettes représentatives de composants réels de ces structures mécaniques. Les éprouvettes peuvent notamment être tubulaires, des plaques ou des poutres de grandes dimensions. En particulier, les éprouvettes peuvent être à base de matériaux métalliques. On précise ici que, par « flexion », il faut comprendre flexion pure.

### ETAT DE LA TECHNIQUE

Classiquement, pour la réalisation d'essais de flexion, il est connu de créer un moment de flexion dans une éprouvette, notamment de deux manières différentes :
- par un montage de type cintrage : l'éprouvette est encastrée aux deux extrémités et une rotation est appliquée soit à une extrémité, soit aux deux extrémités, ou
- par un montage de flexion avec 4 points d'appui : l'éprouvette est positionnée d'une part entre deux appuis externes (grande longueur) et d'autre part entre deux appuis internes (petite longueur). L'application d'un effort - ou chargement - sur les appuis externes ou sur les appuis internes, permet de créer un moment de flexion pure et constant entre les appuis internes, mais uniquement dans un seul sens de chargement. Par exemple, le document US 2013/042697 A1 décrit un dispositif d'essai en flexion d'un dispositif médical.

Afin de permettre la réalisation d'essais de flexion avec un chargement à la fois cyclique et alterné, notamment sur des composants métalliques représentatifs du domaine du nucléaire, les principaux problèmes suivants se présentent.

Tout d'abord, il existe le besoin d'obtenir un dispositif d'essai en flexion capable d'effectuer le changement de sens du chargement sans « brutalité » ou à-coups. Il existe donc le besoin d'obtenir un dispositif d'essai en flexion pour une éprouvette permettant un chargement cyclique alterné, induisant un moment de flexion dans l'éprouvette testée. Or, l'application d'un chargement mécanique avec un rapport de charge négatif (i.e., un chargement alterné), nécessite une inversion du sens de l'application des efforts. Lors de l'inversion du sens du chargement, des phénomènes parasites entrainent des discontinuités dans le chargement. Cela se caractérise par des sauts de chargement qu'il faut être en mesure d'éviter.

Ensuite, il existe le besoin d'obtenir un dispositif d'essai en flexion capable de tester différentes géométries d'éprouvettes sans nécessiter de modifier l'intégralité du dispositif d'essai. Le dispositif d'essai doit être en capacité de s'adapter à plusieurs géométries d'éprouvettes (tubes, poutres et plaques), représentatives des composants réels étudiés. De plus, les dimensions de ces éprouvettes sont variées : souvent de grands diamètres ou de grandes largeurs, elles sont par contre de longueur limitée. En effet, les matériaux testés étant souvent « précieux », la matière disponible est souvent limitée et il est nécessaire de l'économiser, créant ainsi des contraintes dimensionnelles sur les éprouvettes.
Enfin, il existe le besoin d'obtenir un dispositif d'essai en flexion capable d'être installé de manière simple sur des machines d'essais mécaniques « standards ». Ces machines sont également connues sous la dénomination de machine d'essai en traction et en compression, ou machine d'essais universelle ou UTM pour « Universal Testing Machine » en langue anglaise. Une telle machine est un appareil de laboratoire utilisé pour réaliser divers essais mécaniques, en général normalisés, sur des éprouvettes. En effet, le dispositif d'essai doit rester suffisamment simple pour pouvoir se monter sur une presse hydraulique du commerce afin d'être en capacité d'appliquer des chargements modulables et complexes pilotés par la presse hydraulique. Les chargements peuvent être d'intensité variable, monotones ou cycliques, avec des cycles symétriques ou non symétriques, avec des historiques de chargements variés, par exemple avec différentes séquences de surcharges. Le dispositif d'essai doit également être utilisable dans n'importe quel laboratoire d'essai muni de presses hydrauliques.

Cependant, ces solutions ne permettent pas d'appliquer un chargement à la fois cyclique et alterné tout en répondant aux trois problèmes évoqués précédemment.

Les montages de type cintrage sont réalisés sur des machines dédiées, qui par conséquent ne répondent pas au problème de l'installation sur des machines d'essais mécaniques « standards ». En flexion alternée, ils sont dédiés à des éprouvettes de petites dimensions (quelques centimètres) et seulement de géométrie plaque (de préférence fine, avec de faibles moments de flexion). Les machines de grandes dimensions ne permettent pas d'alterner le sens du chargement, et permettent seulement le cintrage d'un tube dans une seule direction.

Les montages classiques de flexion 4 points ne permettent pas d'aller à la fois en traction et en compression de manière alternative, c'est-à-dire que la partie centrale de l'éprouvette (située entre les 2 appuis internes) est soit sollicitée en traction, soit en compression au cours d'un essai. Si l'on souhaite inverser le sens de sollicitation, il faut retourner l'éprouvette sur le montage, ce qui est inenvisageable pour un essai cyclique de fatigue avec jusqu'à plusieurs milliers de cycles de chargement à appliquer.

Les montages de flexion 4 points permettant une sollicitation alternée sont limités à une seule géométrie et une seule dimension d'éprouvette. Les distances entre appuis ne sont pas ajustables, de même que le système de fixation, ce qui ne permet pas de tester différentes géométries d'éprouvettes sans nécessiter de modifier l'intégralité du dispositif d'essai. De plus, pour certains essais de flexion alternée sur des tubes, les appuis sont des anneaux enserrant le tube. Or, au cours de l'essai, la géométrie du tube peut avoir tendance à évoluer (phénomène d'ovalisation du tube) ce qui entraîne des pertes d'appui (saut de chargements, présence de jeu pouvant induire des phénomènes d'usure prématurée par frottement). Ainsi, cela ne permet pas d'effectuer le changement de sens du chargement sans « brutalité » ou à-coups.

Enfin, sur un montage classique de flexion 4 points, les éprouvettes doivent nécessairement être d'une longueur supérieure à la distance entre appuis externes. Si ce n'est pas le cas, il faut, sur chaque éprouvette, venir souder ou visser des rallonges de même géométrie afin d'ajouter la longueur manquante, ce qui est complexe, chronophage et coûteux. Si l'on choisit de réduire la distance entre les appuis externes pour s'adapter à une éprouvette de longueur réduite, le chargement exercé ne sera plus le même, et par conséquent la flèche de l'éprouvette sera également différente.

Ainsi, il existe également le besoin d'obtenir un dispositif d'essai en flexion, lequel permet de tester facilement une éprouvette en flexion alternée tout en permettant de changer facilement de type d'éprouvette à tester. En effet, il est nécessaire de permettre le test d'éprouvettes représentatives de composants réels : tubes, plaques ou poutres de grandes dimensions.

### EXPOSE DE L'INVENTION

Un but de la présente demande est de remédier aux inconvénients précités, en proposant un dispositif d'essai en flexion d'une éprouvette, lequel permet de tester facilement une éprouvette en flexion alternée tout en permettant de changer facilement de type d'éprouvette à tester.

Il est à cet effet proposé, selon un premier aspect, un dispositif d'essai en flexion d'une éprouvette, remarquable en ce qu'il comporte :
- un premier support et un deuxième support déplaçables uniquement axialement l'un par rapport à l'autre selon un axe d'actionnement, le premier support et le deuxième support étant propres à être alternativement rapprochés puis éloignés l'un par rapport à l'autre selon l'axe d'actionnement,
- un premier levier et un deuxième levier se faisant face de part et d'autre de l'axe d'actionnement, le premier levier et le premier support matérialisant un premier axe d'articulation, le deuxième levier et le premier support matérialisant un deuxième axe d'articulation, le premier levier et le deuxième support matérialisant un troisième axe d'articulation, et le deuxième levier et le deuxième support matérialisant un quatrième axe d'articulation,
   le premier axe d'articulation, le deuxième axe d'articulation, le troisième axe d'articulation et le quatrième axe d'articulation étant parallèles entre eux et orthogonaux à l'axe d'actionnement,
- un premier mors étant fixé au premier levier, un deuxième mors étant fixé au deuxième levier, le premier mors et le deuxième mors étant propres à fixer l'éprouvette entre eux, de telle sorte qu'un déplacement relatif du premier support et du deuxième support selon l'axe d'actionnement provoque une flexion de l'éprouvette.

Ainsi, un tel dispositif d'essai permet de tester facilement une éprouvette en flexion alternée tout en permettant de changer facilement de type d'éprouvette à tester. En effet, la solution proposée s'appuie sur la capacité des axes d'articulation à supporter des efforts suivant les directions radiales, et ce sans prendre de jeu. L'inversion du sens du chargement (pour créer un chargement alterné) se fait de manière lisse et sans à-coups. L'un des principes mis en œuvre pour ce dispositif d'essai est basé sur le concept que, lors d'un déplacement relatif du premier support et du deuxième support, les composants du dispositif d'essai interagissent entre eux uniquement via des axes d'articulation. En appliquant un effort de traction ou compression entre le premier et le deuxième support, un chargement de flexion global est généré sur les pièces situées entre le troisième axe d'articulation et le quatrième axe d'articulation, créant ainsi une sollicitation de flexion sur l'éprouvette testée. En alternant la direction de l'effort, deux côtés opposés de l'éprouvette vont être chargés alternativement en traction puis en compression (puis inversement), la flexion étant ainsi alternée. Le présent montage permet de tester des éprouvettes de longueurs réduites, par exemple jusqu'à 1/6 de la distance entre le troisième axe d'articulation et le quatrième axe d'articulation pour le même chargement appliqué. De plus, une grande plage de chargement est rendue possible par l'utilisation des leviers qui multiplient le déplacement relatif imposé initialement au premier support et au deuxième support.

Par ailleurs, le dispositif d'essai est de conception modulaire, en ce que les mors peuvent être changés pour s'adapter à d'autres éprouvettes, sans nécessiter de démonter ou modifier l'intégralité du dispositif d'essai. En outre, sans changer les mors, un mors intermédiaire peut être fixé entre chaque mors et l'éprouvette, afin de s'adapter à une forme spécifique d'éprouvette, telle qu'une plaque.

Par « flexion », il faut comprendre flexion pure. En effet, le dispositif d'essai permet de tester une éprouvette en flexion pure.

Le dispositif d'essai est avantageusement et optionnellement complété par les caractéristiques suivantes, prises seules ou en une quelconque de leurs combinaisons techniquement possibles :
- Le premier levier et le deuxième levier sont chacun disposés entre le premier support et le deuxième support. Ainsi, la compacité du dispositif d'essai est optimale, ce qui rend son installation plus aisée. Par ailleurs, la résistance mécanique du dispositif d'essai est ainsi améliorée.
- Le premier levier et le deuxième levier sont identiques. Ainsi, la modularité est améliorée.
- Le premier mors et le deuxième mors se font face de part et d'autre de l'axe d'actionnement. Ainsi, une flexion maximale peut être obtenue sur l'éprouvette avec un déplacement relatif minimal du premier support et du deuxième support. En outre, une fois l'éprouvette fixée par les mors, aucun alignement n'est nécessaire.
- Le premier mors et le deuxième mors sont identiques ou présentent les mêmes dimensions. Ainsi, la modularité est améliorée.
- Le deuxième support est fixe et le premier support est déplaçable.
- Le premier axe d'articulation et le deuxième axe d'articulation sont symétriques l'un par rapport à l'autre relativement à un plan de symétrie comprenant l'axe d'actionnement et étant parallèle au premier axe d'articulation et au deuxième axe d'articulation.
- Le troisième axe d'articulation et le quatrième axe d'articulation sont symétriques l'un par rapport à l'autre relativement au plan de symétrie.
- Le premier axe d'articulation et le deuxième axe d'articulation présentent une même première distance minimale par rapport à l'axe d'actionnement.
- Le troisième axe d'articulation et le quatrième axe d'articulation présentent une même seconde distance minimale par rapport à l'axe d'actionnement.
- La première distance minimale est strictement supérieure à la seconde distance minimale. Ainsi, un système de type « flexion 4 points » est obtenu de manière simple, tout en permettant un chargement alterné.
- Le premier axe d'articulation et le deuxième axe d'articulation sont dans un premier plan orthogonal à l'axe d'actionnement, et le troisième axe d'articulation et le quatrième axe d'articulation sont dans un second plan orthogonal à l'axe d'actionnement, le premier plan et le second plan étant parallèles entre eux. Ainsi, le chargement peut être réparti de manière équitable.
- En l'absence de flexion de l'éprouvette, le premier plan et le second plan sont confondus. Ainsi, le dispositif d'essai est conçu de telle manière qu'une fois l'éprouvette fixée par les mors, aucun alignement n'est nécessaire. En outre, des cycles de chargement symétriques peuvent être facilement réalisés.
- Le premier support est supporté par un premier embout, et le deuxième support est porté par un deuxième embout, le premier embout et le deuxième embout étant déplaçables axialement l'un par rapport à l'autre selon l'axe d'actionnement, le premier embout et le deuxième embout étant propres à être fixés sur une machine d'essais de traction et de compression. Ainsi, le dispositif d'essai est dimensionné pour se monter simplement sur une machine d'essais standard de traction et de compression, telle qu'une presse hydraulique par exemple à quatre colonnes de capacité maximale 5000 kN en traction ou compression, via le premier embout et le deuxième embout. Cela permet ainsi de profiter des capacités de contrôle/commande des presses hydrauliques et donc de générer tout type de chargement via le programme de pilotage propre à la machine : un chargement monotone (croissant ou décroissant) ou cyclique de forme sinusoïdale ou triangulaire avec un effort moyen pouvant être non nul (chargement non symétrique), et toute combinaison de ces séquences de chargements. Par simple modification du premier embout et du deuxième embout, le dispositif d'essai peut s'adapter à tout autre machine présentant un autre mode de fixation.
- Le premier embout et le deuxième embout sont identiques. Ainsi, la modularité est améliorée.
- Le premier embout est déplaçable et le deuxième embout est fixe.
- Le premier support et le premier embout matérialisent un cinquième axe d'articulation, et le deuxième support et le deuxième embout matérialisent un sixième axe d'articulation. Ainsi, le montage de chaque embout sur son support respectif est particulièrement simple et sûr.
- Le cinquième axe d'articulation et le sixième axe d'articulation sont parallèles entre eux, et de préférence orthogonaux à l'axe d'actionnement.
- Le cinquième axe d'articulation et le sixième axe d'articulation sont perpendiculaires à l'axe d'actionnement.
- Le premier embout et le deuxième embout sont propres à être chacun enserrés dans un mors respectif de la machine d'essai de traction et de compression.
- Le dispositif d'essai est symétrique par rapport à un troisième plan comprenant le cinquième axe d'articulation et le sixième axe d'articulation, et de préférence l'axe d'actionnement.
- Le premier support comporte une première chape, au moins un premier rail, une première patte et une deuxième patte,
   la première chape et le premier embout matérialisant le cinquième axe d'articulation, chaque premier rail traversant un trou de passage respectif de la première chape et étant soudé à la première chape,
   chacune de la première patte et de la deuxième patte étant coulissante relativement à chaque premier rail et étant maintenue en position sur chaque premier rail par un élément de fixation respectif,
   la première patte matérialisant le premier axe d'articulation avec le premier levier, et
   la deuxième patte matérialisant le deuxième axe d'articulation avec le deuxième levier. Ainsi, le premier support est réalisé de manière simple.
- La première patte et la deuxième patte sont identiques. Ainsi, la modularité est améliorée.
- Les premiers rails sont identiques. Ainsi, la modularité est améliorée.
- Le premier support comporte une paire de premiers rails parallèles et distants l'un de l'autre, la première chape comportant une paire de trous de passage, entre lesquels se trouve une échancrure orientée selon l'axe d'actionnement et dans une direction opposée au premier embout. Ainsi, du fait de l'espace libéré entre les premiers rails et de l'espace libéré par l'échancrure, on peut utiliser facilement un grand nombre de capteurs et d'instrumentation dédiés à la mesure de grandeurs de l'éprouvette : des jauges, des capteurs de déplacements LVDT ou Linear Variable Differential Transformer en langue anglaise (transformateur différentiel variable linéaire), des capteurs de mesure de propagation de fissure par différence de potentiel, des caméras pour la mise en œuvre de mesure de déplacement et de déformation par stéréo-corrélation d'images.
- La première chape présente une forme en Y, chaque branche du Y comportant un trou de passage. Ainsi, la première chape est de conception simple et robuste.
- Le deuxième support comporte une deuxième chape, un deuxième rail, une troisième patte et une quatrième patte,
   la deuxième chape et le deuxième embout matérialisant le sixième axe d'articulation,
   le deuxième rail traversant un trou de passage de la deuxième chape et étant soudé à la deuxième chape,
   chacune de la troisième patte et de la quatrième patte étant coulissante relativement au deuxième rail et étant maintenue en position sur le deuxième rail par au moins un élément de fixation respectif,
   la troisième patte matérialisant le troisième axe d'articulation avec le premier levier, et la quatrième patte matérialisant le quatrième axe d'articulation avec le deuxième levier. Ainsi, le deuxième support est réalisé de manière simple.
- La troisième patte et la quatrième patte sont identiques. Ainsi, la modularité est améliorée.
- Chaque premier rail et le deuxième rail présentent un profil en H couché.
- Les éléments de fixation sont des vis.
- Le premier levier, respectivement le deuxième levier, comporte :
   une pluralité de trous traversants primaires régulièrement espacés d'un pas prédéterminé, lesquels sont propres à être traversés par un tourillon formant le premier axe d'articulation, respectivement formant le deuxième axe d'articulation, et
   un trou traversant secondaire, lequel est propre à être traversé par un tourillon formant le troisième axe d'articulation, respectivement formant le quatrième axe d'articulation. Ainsi, le réglage de la flèche maximale subie par l'éprouvette est réglable de manière particulièrement simple. On dispose ainsi d'un montage de flexion de dimensions réglables en ce qui concerne l'entraxe des axes d'articulation. Plus précisément, l'intensité du chargement (flèche) peut être ajusté en modifiant la distance entre le premier axe d'articulation et le deuxième axe d'articulation selon le pas prédéterminé, et ce, quelle que soit la longueur de l'éprouvette. Il suffit de changer la position du premier axe d'articulation dans un autre trou traversant primaire du premier levier et du deuxième axe d'articulation dans un autre trou traversant primaire du deuxième levier.
- Chaque pluralité de trous traversants primaires comprend un nombre de trous traversants primaires compris entre 3 et 10, de préférence égal à 5. Ainsi, le réglage est possible de manière simple tout en maintenant la résistance mécanique des leviers.
- Le pas prédéterminé est compris entre 50 mm et 200 mm, de préférence est égal à 100 mm. Ainsi, le réglage est possible de manière simple tout en maintenant la résistance mécanique des leviers.
- Chaque axe d'articulation est ajusté sans jeu. Ainsi, l'inversion du sens du chargement pour créer un chargement alterné et donc une flexion alternée sur l'éprouvette, est réalisée de manière lisse et sans à-coups.
- Alternativement, chaque axe d'articulation est entouré par un roulement.

Il est également proposé, selon un second aspect, un procédé d'essai en flexion d'une éprouvette au moyen d'un dispositif d'essai tel que précédemment décrit.

Un tel procédé d'essai en flexion comprend les étapes suivantes :
- fixer l'éprouvette entre le premier mors et le deuxième mors,
- alternativement rapprocher puis éloigner le premier support et le deuxième support l'un par rapport à l'autre selon l'axe d'actionnement.

Avantageusement, le procédé d'essai en flexion comprend en outre au moins une des étapes suivantes :
- disposer le premier axe d'articulation dans un des trous traversants primaires du premier levier, et disposer le deuxième axe d'articulation dans un des trous traversants primaires du deuxième levier ;
- fixer le dispositif d'essai dans une machine de traction et de compression, de préférence par le premier embout et par le deuxième embout ;
- libérer le coulissement de la première patte relativement à chaque premier rail et de la troisième patte relativement au deuxième rail par les éléments de fixation ;
- libérer le coulissement de la deuxième patte relativement à chaque premier rail et de la quatrième patte relativement au deuxième rail par les éléments de fixation ;
- fixer l'éprouvette entre le premier mors et le deuxième mors, optionnellement indirectement sur le premier mors via un premier mors intermédiaire et sur le deuxième mors via un deuxième mors intermédiaire ;
- fixer le premier mors sur le premier levier et fixer le deuxième mors sur le deuxième levier ;
- maintenir en position la première patte et la troisième patte par les éléments de fixation ;
- maintenir en position la deuxième patte et la quatrième patte par les éléments de fixation ;
- répéter cycliquement l'étape d'alternativement rapprocher puis éloigner le premier support et le deuxième support l'un par rapport à l'autre selon l'axe d'actionnement.

### DESCRIPTION DES FIGURES

D'autres caractéristiques, buts et avantages de l'exposé ressortiront de la description qui suit, qui est purement illustrative et non limitative, et qui doit être lue en regard des dessins annexés sur lesquels :
La figure 1 représente une vue en perspective d'un dispositif d'essai selon un mode de réalisation ;
la figure 2 représente une vue en coupe transversale du dispositif d'essai représenté sur la figure 1 ;
la figure 3 représente une vue en perspective selon un autre point d'observation d'une pièce du dispositif d'essai représenté sur la figure 1 ;
la figure 4 représente une vue en coupe longitudinale d'une partie du dispositif d'essai représenté sur la figure 1 ;
La figure 5 est un organigramme d'étapes d'un exemple de procédé d'essai en flexion mettant en œuvre le dispositif d'essai selon le mode de réalisation représenté sur la figure 1.

Sur l'ensemble des figures, les éléments similaires portent des références identiques.

### DESCRIPTION DETAILLEE

Dans les figures annexées, les diverses orientations géométriques sont définies dans un repère XYZ, défini par une direction longitudinale X, une direction transversale Y, et une direction verticale Z.

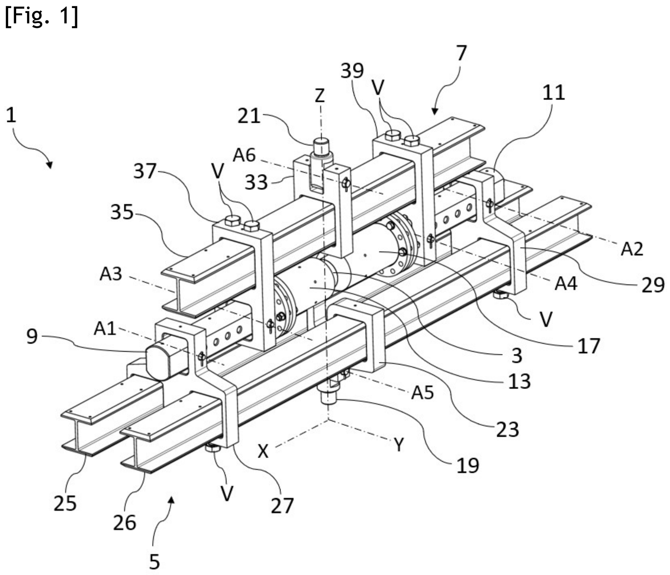

La figure 1 représente schématiquement un dispositif d'essai 1 en flexion d'une éprouvette 3. Un tel dispositif d'essai 1 est propre à être monté et fixé dans une machine d'essai de traction et de compression. Une telle machine d'essai de traction et de compression étant connue, elle n'est pas représentée dans un souci de clarté de la figure 1.

Le dispositif d'essai 1 comporte un premier support 5 et un deuxième support 7. Le dispositif d'essai comporte également un premier levier 9 et un deuxième levier 11. Le dispositif d'essai 1 comporte en outre un premier mors 13 et un deuxième mors 17. Le premier mors 13 est également appelé mors gauche, et le deuxième mors 17 est également appelé mors droit.

Le premier support 5 et le deuxième support 7 sont déplaçables uniquement axialement l'un par rapport à l'autre selon un axe d'actionnement, lequel est formé par l'axe vertical Z dans l'exemple représenté sur la figure 1. Plus précisément, le premier support 5 et le deuxième support 7 sont propres à être alternativement rapprochés puis éloignés l'un par rapport à l'autre selon l'axe d'actionnement Z. Avantageusement, le deuxième support 7 est fixe et le premier support 5 est déplaçable.

Avantageusement, le premier levier 9 et le deuxième levier 11 sont identiques.

De préférence, le premier levier 9 et le deuxième levier 11 se font face de part et d'autre de l'axe d'actionnement Z.

Comme cela est représenté sur la figure 1, le premier levier 9 et le premier support 5 matérialisent un premier axe d'articulation A1, le deuxième levier 11 et le premier support 5 matérialisent un deuxième axe d'articulation A2, le premier levier 9 et le deuxième support 7 matérialisent un troisième axe d'articulation A3, et le deuxième levier 11 et le deuxième support 7 matérialisent un quatrième axe d'articulation A4.

Avantageusement, le premier axe d'articulation A1, le deuxième axe d'articulation A2, le troisième axe d'articulation A3 et le quatrième axe d'articulation A4 sont parallèles entre eux, et de préférence orthogonaux à l'axe d'actionnement Z.

De préférence, le premier levier 9 et le deuxième levier 11 sont chacun disposés entre le premier support 5 et le deuxième support 7.

Avantageusement, le premier axe d'articulation A1 et le deuxième axe d'articulation A2 présentent une même première distance minimale par rapport à l'axe d'actionnement Z. Plus précisément, le premier axe d'articulation A1 et le deuxième axe d'articulation A2 sont symétriques l'un par rapport à l'autre relativement à un plan de symétrie comprenant l'axe d'actionnement Z et étant parallèle au premier axe d'articulation A1 et au deuxième axe d'articulation A2.

Avantageusement, le troisième axe d'articulation A3 et le quatrième axe d'articulation A4 présentent une même seconde distance minimale par rapport à l'axe d'actionnement Z. Plus précisément, le troisième axe d'articulation A3 et le quatrième axe d'articulation A4 sont symétriques l'un par rapport à l'autre relativement au plan de symétrie précité.

De préférence, la première distance minimale est strictement supérieure à la seconde distance minimale.

Avantageusement, le premier axe d'articulation A1 et le deuxième axe d'articulation A2 sont dans un premier plan orthogonal à l'axe d'actionnement Z, et le troisième axe d'articulation A3 et le quatrième axe d'articulation A4 sont dans un second plan orthogonal à l'axe d'actionnement Z, le premier plan et le second plan étant parallèles entre eux. De préférence, en l'absence de flexion de l'éprouvette 3, le premier plan et le second plan sont confondus.

Avantageusement, le premier support 5 est supporté par un premier embout 19, et le deuxième support 7 est porté par un deuxième embout 21.

De préférence, le premier embout 19 et le deuxième embout 21 sont identiques.

Avantageusement, le premier embout 19 et le deuxième embout 21 sont propres à être fixés, par exemple vissés par une extrémité filetée, sur la machine d'essais de traction et de compression. De préférence, le premier embout 19 et le deuxième embout 21 sont propres à être chacun enserrés dans un mors respectif de la machine d'essai de traction et de compression.

Ainsi, le premier embout 19 et le deuxième embout 21 sont déplaçables axialement l'un par rapport à l'autre selon l'axe d'actionnement Z. Avantageusement, le premier embout 19 est déplaçable et le deuxième embout 21 est fixe.

Avantageusement, comme cela est représenté sur la figure 1, le premier support 5 et le premier embout 19 matérialisent un cinquième axe d'articulation A5, et le deuxième support 7 et le deuxième embout 21 matérialisent un sixième axe d'articulation A6. De préférence, le cinquième axe d'articulation A5 et le sixième axe d'articulation A6 sont parallèles entre eux, et de préférence orthogonaux à l'axe d'actionnement Z. Plus préférentiellement, le cinquième axe d'articulation A5 et le sixième axe d'articulation A6 sont perpendiculaires à l'axe d'actionnement Z.

Avantageusement, le dispositif d'essai 1 est symétrique par rapport à un troisième plan comprenant le cinquième axe d'articulation A5 et le sixième axe d'articulation A6, et de préférence l'axe d'actionnement Z.

Avantageusement, le premier mors 13 est fixé au premier levier 9, le deuxième mors 17 est fixé au deuxième levier 11. Le premier mors 13 et le deuxième mors 17 sont propres à fixer l'éprouvette 3 entre eux, de telle sorte qu'un déplacement relatif du premier support 5 et du deuxième support 7 selon l'axe d'actionnement Z provoque une flexion de l'éprouvette 3.

Lorsqu'elle est montée sur le dispositif d'essai 1, l'éprouvette 3 est ainsi fixée directement sur le premier mors 13 et le deuxième mors 17. Comme cela est représenté sur la figure 1, l'éprouvette 3 est tubulaire. Alternativement, selon une variante non représentée, par exemple lorsque l'éprouvette 3 est d'une forme différente, telle qu'une plaque, ou bien présente des dimensions différentes, l'éprouvette 3 est avantageusement fixée indirectement sur le premier mors 13 via un premier mors intermédiaire, et sur le deuxième mors 17 via un deuxième mors intermédiaire.

Avantageusement, comme cela est représenté sur la figure 1, le premier mors 13 et le deuxième mors 17 sont identiques ou présentent les mêmes dimensions. De préférence, le premier mors 13 et le deuxième mors 17 sont identiques sauf en ce que le premier mors 13 possède un premier filetage par exemple standard, tandis que le deuxième mors 17 possède un deuxième filetage à pas inversé relativement au premier filetage.

De préférence, le premier mors 13 et le deuxième mors 17 se font face de part et d'autre de l'axe d'actionnement Z.

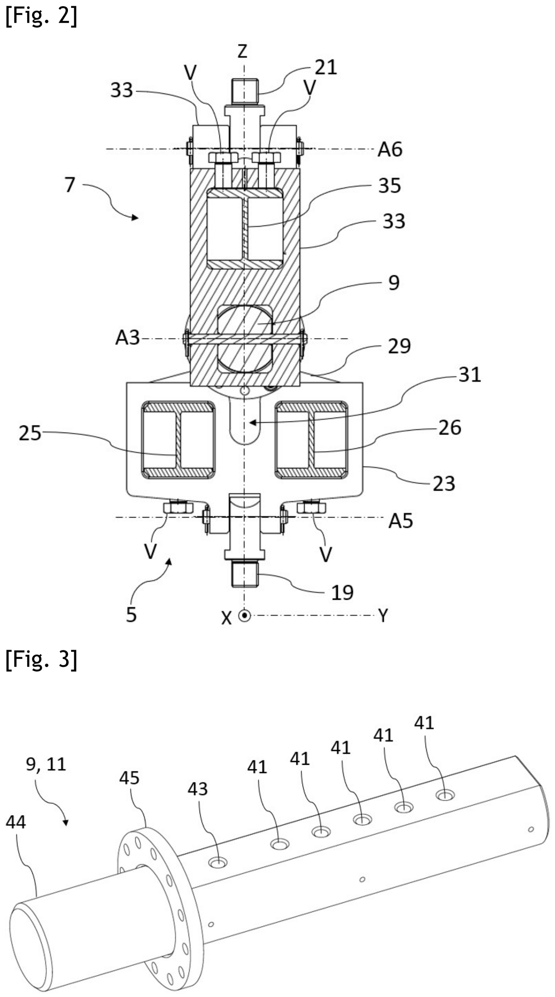

Le premier support 5 va être décrit plus précisément comme suit, en référence à la figure 1 et à la figure 2, laquelle représente une vue en coupe transversale du dispositif d'essai 1 représenté sur la figure 1 selon un plan parallèle à l'axe d'actionnement Z et comprenant le troisième axe d'articulation A3.

Avantageusement, le premier support 5 comporte une première chape 23, au moins un premier rail 25, 26, une première patte 27 et une deuxième patte 29.

De préférence, la première chape 23 et le premier embout 19 matérialisent le cinquième axe d'articulation A5.

Avantageusement, la première patte 27 matérialise le premier axe d'articulation A1 avec le premier levier 9.

Avantageusement, la deuxième patte 29 matérialise le deuxième axe d'articulation A2 avec le deuxième levier 11.

De préférence, le premier support 5 comporte une paire de premiers rails 25, 26 parallèles et distants l'un de l'autre, la première chape 23 comportant ainsi une paire de trous de passage.

Avantageusement, chaque premier rail 25, 26 présente un profil en H couché. Ainsi, l'âme du H est parallèle à l'axe d'actionnement Z et les branches du H sont orthogonales à l'axe d'actionnement Z.

De préférence, les premiers rails 25, 26 sont identiques.

Avantageusement, comme cela est représenté sur la figure 2, chaque premier rail 25, 26 traverse un trou de passage respectif de la première chape 23 et est soudé à la première chape 23.

Avantageusement, la première chape 23 comporte une échancrure 31 se trouvant entre la paire de trous de passage, l'échancrure 31 étant orientée selon l'axe d'actionnement Z et dans une direction opposée au premier embout 19.

De préférence, la première chape 23 présente une forme en Y, chaque branche du Y comportant un trou de passage.

Avantageusement, chacune de la première patte 27 et de la deuxième patte 29 est coulissante relativement à chaque premier rail 25, 26 et est maintenue en position sur chaque premier rail 25, 26 par un élément de fixation V respectif. De préférence, l'élément de fixation V est une vis, laquelle est vissée à travers la patte respective 27, 29 et appuie sur le premier rail 25, 26 respectif. Ainsi de préférence, les éléments de fixation V sont des vis.

De préférence, la première patte 27 et la deuxième patte 29 sont identiques.

Le deuxième support 7 va être décrit plus précisément comme suit, en référence à la figure 1 et à la figure 2.

Avantageusement, le deuxième support 7 comporte une deuxième chape 33, un deuxième rail 35, une troisième patte 37 et une quatrième patte 39.

Avantageusement, le deuxième rail 35 présente un profil en H couché. Ainsi, l'âme du H est parallèle à l'axe d'actionnement Z et les branches du H sont orthogonales à l'axe d'actionnement Z.

De préférence, la deuxième chape 33 et le deuxième embout 21 matérialisent le sixième axe d'articulation A6

Avantageusement, la troisième patte 37 matérialise le troisième axe d'articulation A3 avec le premier levier 9.

Avantageusement, la quatrième patte 39 matérialise le quatrième axe d'articulation A4 avec le deuxième levier 11.

De préférence, la troisième patte 37 et la quatrième patte 39 sont identiques.

De préférence, le deuxième rail 35 traverse un trou de passage de la deuxième chape 33 et est soudé à la deuxième chape 33.

Avantageusement, chacune de la troisième patte 37 et de la quatrième patte 39 est coulissante relativement au deuxième rail 35 et est maintenue en position sur le deuxième rail 35 par au moins un élément de fixation V respectif. De préférence, chacune de la troisième patte 37 et de la quatrième patte 39 est coulissante relativement au deuxième rail 35 et est maintenue en position sur le deuxième rail 35 par deux éléments de fixation V respectifs. De préférence, chaque élément de fixation V est une vis, laquelle est vissée à travers la patte respective 37, 39 et appuie sur le deuxième rail 35. Ainsi, les éléments de fixation V sont des vis.

Avantageusement, chaque axe d'articulation A1-A6 est formé par un tourillon, lequel est de préférence maintenu axialement en position selon son axe longitudinal par une paire de goupilles disposées à chaque extrémité du tourillon. Pour former l'axe d'articulation respectif A1-A6, chaque tourillon relie les deux pièces respectives articulées entre elles.

Par exemple, pour former le premier axe d'articulation A1, le tourillon relie le premier levier 9 et la première patte 27 et de sorte que le premier levier 9 et la première patte 27 puissent pivoter l'un par rapport à l'autre. Plus précisément, le tourillon traverse la première patte 27 et le premier levier 29, et est maintenu axialement en position selon son axe longitudinal par une paire de goupilles disposées à chaque extrémité du tourillon.

Avantageusement, chaque axe d'articulation A1-A6 est ajusté sans jeu. Alternativement et selon une variante non représentée, chaque axe d'articulation A1-A6 est entouré par un roulement.

La figure 3 représente, en perspective, indifféremment le premier levier 9 ou le deuxième levier 11, du fait qu'ils sont avantageusement identiques.

Avantageusement, le premier levier 9, respectivement le deuxième levier 11, comporte une pluralité de trous traversants primaires 41. Les trous traversants primaires 41 sont propres à être traversés par un tourillon formant le premier axe d'articulation A1, respectivement formant le deuxième axe d'articulation A2. En d'autres termes, le tourillon formant le premier axe d'articulation A1, respectivement formant le deuxième axe d'articulation A2, traverse un seul des trous traversants primaires 41, selon le réglage choisi.

De préférence, chaque pluralité de trous traversants primaires 41 comprend un nombre de trous traversants primaires 41 compris entre 3 et 10, de préférence égal à 5 comme cela est représenté.

De préférence, les trous traversants primaires 41 sont régulièrement espacés d'un pas prédéterminé.

Avantageusement, le pas prédéterminé est compris entre 50 mm et 200 mm, de préférence est égal à 100 mm.

De préférence, le premier levier 9, respectivement le deuxième levier 11, comporte un trou traversant secondaire 43, lequel est propre à être traversé par un tourillon formant le troisième axe d'articulation A3, respectivement formant le quatrième axe d'articulation A4.

Avantageusement, le premier levier 9, respectivement le second levier 11, comporte deux méplats parallèles sur lesquels débouchent les trous traversants primaires 41 et le trou traversant secondaire 43.

Avantageusement, le premier levier 9, respectivement le deuxième levier 11, comporte une extrémité d'arbre 44 propre à être insérée dans un alésage correspondant du premier mors 13, respectivement du deuxième mors 17, de préférence jusqu'à une paroi interne formant butée B. Ainsi, le premier mors 13 est précisément positionné sur le premier levier 9, et le deuxième mors 17 est précisément positionné sur le deuxième levier 11.

Avantageusement, le premier levier 9, respectivement le deuxième levier 11, comporte une bride 45 propre à la fixation du premier mors 13, respectivement du deuxième mors 17, la bride 45 étant disposée entre l'extrémité d'arbre et le trou traversant secondaire. De préférence, la bride 45 est soudée sur l'extrémité d'arbre.

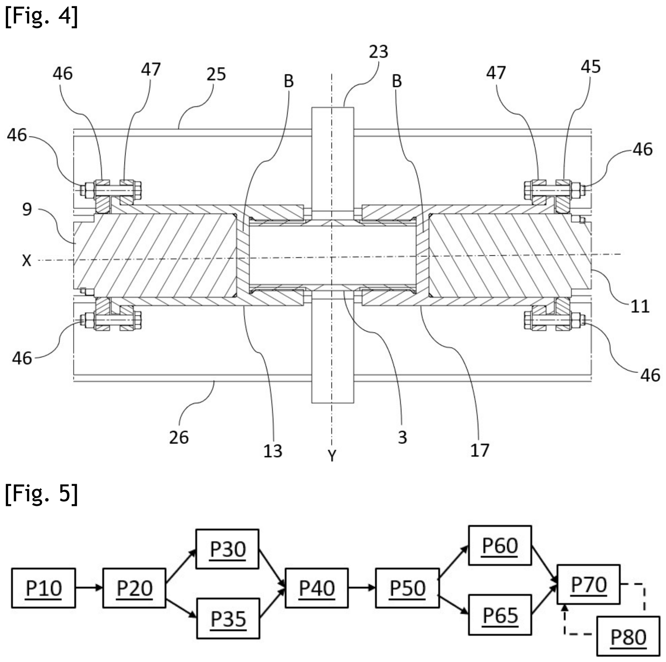

La figure 4 représente une vue en coupe longitudinale d'une partie du dispositif d'essai 1 représenté sur la figure 1 selon un plan orthogonal à l'axe d'actionnement Z. Ainsi, la figure 2 représente plus en détail la fixation du premier mors 13 sur le premier levier 9, du deuxième mors 17 sur le deuxième levier 11, et de l'éprouvette 3 sur chacun du premier mors 13 et du deuxième mors 17.

Avantageusement, la bride 45 est pourvue de trous de passage pour des boulons 46 de fixation du mors respectif 13, 17 sur le premier levier 9, respectivement le deuxième levier 11, par l'intermédiaire d'une bride flottante 47 se trouvant en butée contre un épaulement du mors respectif 13, 17. Ainsi, du fait du boulonnage par les boulons 46, de préférence par quatre boulons 46, disposés par paires diamétralement opposées, l'épaulement du mors respectif 13, 17 se trouve pris en étau entre la bride 45 et la bride flottante 47.

Avantageusement, l'éprouvette 3 est filetée à chacune de ses extrémités et est vissée dans un taraudage du mors respectif 13, 17, de préférence jusqu'à la paroi interne formant butée B. Cela permet une fixation simple et résistante de l'éprouvette 3 aux mors 13, 17.

Avantageusement, les composants du dispositif d'essai 1 sont en acier, de préférence de l'acier choisi dans le groupe comprenant de l'acier S355, de l'acier S690, de l'acier 30NiCr Mo16, de l'acier X30Cr13, de l'acier 316L. De préférence, les tourillons formant les axes d'articulation A1-A6 sont en acier de type X30Cr13. De préférence, le premier embout 19, le deuxième embout 21, le premier mors 13 et le deuxième mors 17 sont en acier de type 30NiCrMo16. A titre d'exemple, l'éprouvette 3 est en métal, de préférence en acier, plus préférentiellement en acier 316L.

La figure 5 représente les étapes principales d'un procédé d'essai en flexion d'une éprouvette 3 au moyen d'un dispositif d'essai 1 tel que précédemment décrit.

Un tel procédé d'essai en flexion comprend les étapes suivantes :
- P40 fixer l'éprouvette 3 entre le premier mors 13 et le deuxième mors 17
- P70 alternativement rapprocher puis éloigner le premier support 5 et le deuxième support 7 l'un par rapport à l'autre selon l'axe d'actionnement Z.

Avantageusement, le procédé d'essai en flexion comprend en outre au moins une des étapes suivantes :
- P10 : disposer le premier axe d'articulation A1 dans un des trous traversants primaires 41 du premier levier 9, et disposer le deuxième axe d'articulation A2 dans un des trous traversants primaires 41 du deuxième levier 11 ;
- P20 : fixer le dispositif d'essai 1 dans une machine de traction et de compression, de préférence par le premier embout 19 et par le deuxième embout 21 ;
- P30 : libérer le coulissement de la première patte 27 relativement à chaque premier rail 25, 26 et de la troisième patte 37 relativement au deuxième rail 35 par les éléments de fixation V ;
- P35 : libérer le coulissement de la deuxième patte 27 relativement à chaque premier rail 25, 26 et de la quatrième patte 39 relativement au deuxième rail 35 par les éléments de fixation V ;
- P40 fixer l'éprouvette 3 entre le premier mors 13 et le deuxième mors 17, optionnellement indirectement sur le premier mors 13 via un premier mors intermédiaire et sur le deuxième mors 17 via un deuxième mors intermédiaire ;
- P50 : fixer le premier mors 13 sur le premier levier 9 et fixer le deuxième mors 17 sur le deuxième levier 11 ;
- P60 maintenir en position la première patte 27 et la troisième patte 37 par les éléments de fixation V ;
- P65 maintenir en position la deuxième patte 29 et la quatrième patte 39 par les éléments de fixation V ;
- P80 répéter cycliquement l'étape P70 d'alternativement rapprocher puis éloigner le premier support 5 et le deuxième support 7 l'un par rapport à l'autre selon l'axe d'actionnement Z.

L'invention n'est pas limitée aux modes de réalisation et variantes décrits et représentés sur les figures annexées. Des modifications restent possibles, notamment du point de vue de la constitution des diverses caractéristiques techniques ou par substitution d'équivalents techniques, sans sortir pour autant du domaine de protection de l'invention.

## Revendications

1. Dispositif d'essai (1) en flexion d'une éprouvette (3), comportant :
- un premier support (5) et un deuxième support (7) déplaçables uniquement axialement l'un par rapport à l'autre selon un axe d'actionnement (Z), le premier support (5) et le deuxième support (7) étant propres à être alternativement rapprochés puis éloignés l'un par rapport à l'autre selon l'axe d'actionnement (Z),
- un premier levier (9) et un deuxième levier (11) se faisant face de part et d'autre de l'axe d'actionnement (Z), le premier levier (9) et le premier support (5) matérialisant un premier axe d'articulation (A1), le deuxième levier (11) et le premier support (5) matérialisant un deuxième axe d'articulation (A2), le premier levier (9) et le deuxième support (7) matérialisant un troisième axe d'articulation (A3), et le deuxième levier (11) et le deuxième support (7) matérialisant un quatrième axe d'articulation (A4),
le premier axe d'articulation (A1), le deuxième axe d'articulation (A2), le troisième axe d'articulation (A3) et le quatrième axe d'articulation (A4) étant parallèles entre eux et orthogonaux à l'axe d'actionnement (Z),
le dispositif d'essai (1) étant **caractérisé en ce qu'**il comporte :
- un premier mors (13) étant fixé au premier levier (9), un deuxième mors (17) étant fixé au deuxième levier (11), le premier mors (13) et le deuxième mors (17) étant propres à fixer l'éprouvette (3) entre eux, l'éprouvette (3) étant filetée à chacune de ses extrémités et étant vissée dans un taraudage du mors respectif (13, 17), de telle sorte qu'un déplacement relatif du premier support (5) et du deuxième support (7) selon l'axe d'actionnement (Z) provoque une flexion de l'éprouvette (3).

2. Dispositif d'essai (1) selon la revendication 1, dans lequel :
le premier axe d'articulation (A1) et le deuxième axe d'articulation (A2) présentent une même première distance minimale par rapport à l'axe d'actionnement (Z),
le troisième axe d'articulation (A3) et le quatrième axe d'articulation (A4) présentent une même seconde distance minimale par rapport à l'axe d'actionnement (Z),
la première distance minimale étant strictement supérieure à la seconde distance minimale.

3. Dispositif d'essai (1) selon la revendication 1 ou 2, dans lequel le premier axe d'articulation (A1) et le deuxième axe d'articulation (A2) sont dans un premier plan orthogonal à l'axe d'actionnement (Z), et le troisième axe d'articulation (A3) et le quatrième axe d'articulation (A4) sont dans un second plan orthogonal à l'axe d'actionnement (Z), le premier plan et le second plan étant parallèles entre eux.

4. Dispositif d'essai (1) selon l'une quelconque des revendications 1 à 3, dans lequel le premier support (5) est supporté par un premier embout (19), et le deuxième support (7) est porté par un deuxième embout (21), le premier embout (19) et le deuxième embout (21) étant déplaçables axialement l'un par rapport à l'autre selon l'axe d'actionnement (Z), le premier embout (19) et le deuxième embout (21) étant propres à être fixés sur une machine d'essais de traction et de compression.

5. Dispositif d'essai (1) selon la revendication 4, dans lequel le premier support (5) et le premier embout (19) matérialisent un cinquième axe d'articulation (A5), et le deuxième support (7) et le deuxième embout (21) matérialisent un sixième axe d'articulation (A6),
le cinquième axe d'articulation (A5) et le sixième axe d'articulation (A6) étant parallèles entre eux et orthogonaux à l'axe d'actionnement (Z).

6. Dispositif d'essai (1) selon la revendication 4 ou 5, dans lequel le premier support (5) comporte une première chape (23), au moins un premier rail (25, 26), une première patte (27) et une deuxième patte (29),
la première chape (23) et le premier embout (19) matérialisant le cinquième axe d'articulation (A5),
chaque premier rail (26, 26) traversant un trou de passage respectif de la première chape (23) et étant soudé à la première chape (23),
chacune de la première patte (27) et de la deuxième patte (29) étant coulissante relativement à chaque premier rail (25, 26) et étant maintenue en position sur chaque premier rail (25, 26) par un élément de fixation (V) respectif,
la première patte (27) matérialisant le premier axe d'articulation (A1) avec le premier levier (9), et
la deuxième patte (29) matérialisant le deuxième axe d'articulation (A2) avec le deuxième levier (11).

7. Dispositif d'essai (1) selon la revendication 6, dans lequel le premier support (5) comporte une paire de premiers rails (25, 26) parallèles et distants l'un de l'autre, la première chape (23) comportant une paire de trous de passage, entre lesquels se trouve une échancrure (31) orientée selon l'axe d'actionnement (Z) et dans une direction opposée au premier embout (19).

8. Dispositif d'essai (1) selon l'une quelconque des revendications 4 à 7, dans lequel le deuxième support (7) comporte une deuxième chape (33), un deuxième rail (35), une troisième patte (37) et une quatrième patte (39),
la deuxième chape (33) et le deuxième embout (21) matérialisant le sixième axe d'articulation (A6),
le deuxième rail (35) traversant un trou de passage de la deuxième chape (33) et étant soudé à la deuxième chape (33),
chacune de la troisième patte (37) et de la quatrième patte (39) étant coulissante relativement au deuxième rail (35) et étant maintenue en position sur le deuxième rail (35) par au moins un élément de fixation (V) respectif,
la troisième patte (37) matérialisant le troisième axe d'articulation (A3) avec le premier levier (9), et
la quatrième patte (39) matérialisant le quatrième axe d'articulation (A4) avec le deuxième levier (11).

9. Dispositif d'essai (1) selon l'une quelconque des revendications 1 à 8, dans lequel le premier levier (9), respectivement le deuxième levier (11), comporte :
- une pluralité de trous traversants primaires (41) régulièrement espacés d'un pas prédéterminé, lesquels sont propres à être traversés par un tourillon formant le premier axe d'articulation (A1), respectivement formant le deuxième axe d'articulation (A2), et
- un trou traversant secondaire (43), lequel est propre à être traversé par un tourillon formant le troisième axe d'articulation (A3), respectivement formant le quatrième axe d'articulation (A4).

10. Dispositif d'essai (1) selon l'une quelconque des revendications 1 à 9, dans lequel chaque axe d'articulation (A1-A6) est ajusté sans jeu.

11. Procédé d'essai en flexion d'une éprouvette (3) au moyen d'un dispositif d'essai (1) selon l'une quelconque des revendications 1 à 10, comprenant les étapes suivantes :
- (P40) fixer l'éprouvette (3) entre le premier mors (13) et le deuxième mors (17),
- (P70) alternativement rapprocher puis éloigner le premier support (5) et le deuxième support (7) l'un par rapport à l'autre selon l'axe d'actionnement (Z).
